**Europäisches Patentamt**

**European Patent Office**

**Office européen des brevets**

(19)

(11) Veröffentlichungsnummer: **0 035 967**
**A2**

(12)

# EUROPÄISCHE PATENTANMELDUNG

(21) Anmeldenummer: **81810068.7**

(22) Anmeldetag: **27.02.81**

(51) Int. Cl.³: **G 01 C 11/06**

(30) Priorität: **07.03.80 US 127947**

(43) Veröffentlichungstag der Anmeldung:
**16.09.81 Patentblatt 81/37**

(84) Benannte Vertragsstaaten:
**CH DE LI**

(71) Anmelder: **KERN & CO. AG Werke für Präzisionsmechanik Optik und Elektronik**

**CH-5001 Aarau(CH)**

(71) Anmelder: **KERN Instruments Inc.
Geneva Road
Brewster, NY 10509(US)**

(72) Erfinder: **Wehrli, Hans J.
Upland Drive
Valhalla, N.Y. 10595(US)**

(72) Erfinder: **Roberts, Timothy P.
2 Baker St.
Mohegan Lake, N.Y. 10547(US)**

(74) Vertreter: **Seeger, Jan
c/o Kern & Co. AG
CH-5001 Aarau(CH)**

(54) **Photogrammetrisches Auswertegerät, sowie dessen Verwendung zur Kartennachführung.**

(57) Das Auswertegerät (10) umfasst ein optisches Betrachtungssystem (12) zur Betrachtung eines aus einem stereoskopischen Bildpaar (16, 18) abgeleiteten Stereomodells. Ferner sind erste steuerbare Abtastmittel (24) zur Abtastung des Stereomodells vorgesehen. Die Abtastbewegungen werden in Zeichenbewegungen einer Zeichnungsoder Sichtanzeigeeinrichtung (30) umgesetzt. Das Auswertegerät umfasst weiterhin zweite Mittel (42, 44) zur Abtastung von Bildinformationen eines Bildplanes zur Darstellung eines Teiles des Bildplanes.

Das Bildplan-Teilbild wird in das optische Betrachtungssystem (12) übertragen. Dieses umfasst Mittel (20) zur Ueberlagerung des Teilbildes und des Bildes des Stereomodelles zur simultanen Betrachtung durch einen Operateur (14). Die zweiten Abtastmittel (44) tasten mit Vorteil mindestens einen Teil der Bildinformationen des Bildplanes an einem auf der Zeichnungs- oder Sichtanzeigeeinrichtung (30) befindlichen Bild ab, und ein Fernsehkamera (44)-Monitorsystem (46) dient zur Uebertragung des Bildplanes in das optische Betrachtungssystem (12). Das Auswertegerät lässt sich mit Vorteil zur Katennachführung oder für ähnliche Kontrollaufgaben verwenden.

./...

Fig. 3

- 1 -

Photogrammetrisches Auswertegerät, sowie dessen Verwendung zur

Kartennachführung

Die Erfindung betrifft ein photogrammetrisches Auswertegerät zur stereoskopischen Auswertung von Messbildern, sowie eine Verwendung des Auswertegerätes zur Kartennachführung.

In der Photogrammetrie wird das stereoskopische Sehen dazu verwendet, um aus einem stereoskopischen Bildpaar, z.B. einem Luftbildpaar zuverlässige Messwerte von Höhe und Lage von Geländepunkten zu gewinnen. Aus den Messbildern solcher Bildpaare werden bekanntlich Hochdruckkarten und Grundrissdarstellungen durch photogrammetrische Auswertung abgeleitet. Photogrammetrische Verfahren werden auch in zahlreichen technischen Bereichen zur Lösung vermessungstechnischer Aufgaben eingesetzt, die sowohl absolute als auch relative Bestimmungen von Grösse, Form, Höhe, Tiefe und Lage von Objekten in Bezug auf ihre Umgebung erfordern. Einige solcher Bereiche sind Archäologie, Bestimmung von Viehbeständen und medizinische Untersuchungen. Demnach ist die nachfolgend beschriebene Verwendung der Erfindung zur

- 2 -

Kartenherstellung nur als nicht ausschliessliches Beispiel zu betrachten.

Bekanntlich werden zwei Luftbilder, d.h. Messbilder des gleichen Geländes an verschiedenen Punkten einer Vertikalebene aufgenommen. Die Messbilder eines solchen Paares werden dann verglichen, um Geländepunkte gleicher Höhenlage zu bestimmen. Eine Eigenschaft wirklicher Vertikalstereophotogramme ist das exakte "Zusammenfallen" aller Punkte einer gegebenen Höhenlage auf einem Messbild mit den gleichen Punkten auf dem zweiten Messbild. Die unregelmässige Kurve, auf der die koinzidierenden Punkte gleicher Höhenlage liegen, heisst Höhenlinie oder Isohypse. Legt man also zwei zusammengehörige Messbilder übereinander, so kann man die Höhenlinien einer gegebenen Höhe exakt zur Deckung bringen, indem man die Messbilder in einer Horizontalebene relativ zueinander verschiebt. Zu jeder Höhenlage existiert eine entsprechende Relativverschiebung bei der die Linien der betreffenden Höhe zusammenfallen. Durch manuelles oder automatisches Abfahren durch auf die Messbilder bezügliche Abtastbewegungen kann man Höhenlinien konstanter Höhe zeichnen.

Zum Zeichnen derartiger Geländekarten in Höhendarstellung wurden bekanntlich zahlreiche komplizierte Hilfsvorrichtungen konstruiert. Solche Geräte sind als photogrammetrische Auswertegeräte oder Stereomessgeräte allgemein bekannt. Sie werden zur Herstellung und Nachführung topographischer Karten verwendet. Diese Geräte erfordern hohe Präzision und müssen vielseitig verwendbar sein.

- 3 -

Derartige bekannte Geräte sind beispielsweise das PG2, PG2-AT, PG3 und PG2-SSL der Firma Kern & CO. AG, Aarau, Schweiz. Allgemeine Merkmale solcher Geräte sind folgende:

a) ein optisches Betrachtungssystem zur Betrachtung eines aus einem stereoskopischen Bildpaar abgeleiteten Stereomodells,

b) vom Operateur steuerbare Abtastmittel zur Abtastung des Stereomodells,

c) eine Zeichen- oder Sichtanzeigeeinrichtung und

d) Mittel zur Umsetzung der Bewegungen der Abtastmittel in Zeichenbewegungen der Zeichen- oder Sichtanzeigeeinrichtung. Ausführungsbeispiele findet man in US-PS 2 910 910, US-PS 2 912 761, US-PS 3 004 464, US-PS 3 465 444, US-PS 3 678 582, US-PS 3 989 933, US-PS 4 005 932 und US-PS 4 057 336.

Bei der Kartennachführung wird allgemein eine vorhandene Karte auf einer Zeichen- oder Sichtanzeigeeinrichtung, meistens auf einem automatischen Zeichentisch dargestellt, und neue Luftbilder oder Messbilder des betreffenden Geländes werden in ein photogrammetrisches Auswertegerät eingelegt und durch das optische Betrachtungssystem betrachtet. Dabei muss der Operateur fortlaufend sein Blickfeld von der vorhandenen Karte zu den neuen Messbildern im Gerät und zurück wechseln, um festzustellen, welche auf der Karte nicht vorhandenen Objekte in den Messbildern auftreten und umgekehrt. Es ist offenbar kein photogrammetrisches Auswertegerät bekannt, welches eine simultane Betrachtung der vorhandenen Karte und der neuen Luftbilder ermöglichen würde.

Es sind allerdings Auswertegeräte bekannt, bei denen Fernsehkameras und Fernsehmonitore Verwendung finden. Im KERN-PG3 System dient ein geräteinternes Fernsehsystem der Nahbetrachtung des Zeichentisches um den Zeichenstift herum. Die Fernsehkamera ist am Zeichenkopf des Zeichentisches montiert und der Fernsehmonitor neben dem Arbeitsplatz des Operateurs. Gemäss US-PS 2 910 910 wird ein aus einem stereoskopischen Bildpaar abgeleitetes Stereomodell mit einer Fernsehaufnahme-Einheit abgetastet. Die Informationen von der Aufnahmeeinheit werden einer elektronischen Recheneinrichtung zugeführt, durch die entschieden wird, ob der abgetastete Punkt auf der Oberfläche des Stereomodells liegt oder nicht. Liegt der Punkt auf der Modelloberfläche, so wird auf einem Zeichnungsblatt ein entpsrechender Punkt markiert, wobei sich die Höhenlinien aus aufeinanderfolgenden Punkten ergeben.

Durch US-PS 2 912 761 ist ein Gerät bekannt, bei dem zwei optische Projektionen zweier Messbilder mittels zweier photoelektrischer Abtaster abgetastet werden. Die Abtaster setzen die Bildmuster in elektrische Signale um, die nach Verstärkung und bestimmten Vergleichsschritten zur Aufzeichnung von Marken auf der Geländekarte verwendet werden. Mit den Geräten gemäss US-PS 2 933 008 und US-PS 2 988 953 werden jeweils zwei Luftbilder durch zwei Fernsehkameras aufgenommen. Die Fernsehsignale werden mit zwei separaten Monitoren betrachtet und überwacht und in einem gemeinsamen Monitor überlagert. Das Bild auf dem gemeinsamen Monitor wird mit einer Fotokamera fotografiert. Die jedem Luftbild entsprechenden Signale können auch am Ausgang eines Signalwechselverstärkers abgegriffen und zur späteren Auswertung in einem Magnetspeicher gespeichert werden. Vom Speicher können die Bildsignale wieder auf einen Fernsehmonitor gegeben werden.

Im Auswertegerät gemäss US-PS 3 004 464 wird mit einer Vidikon-Kamera ein aus einem stereoskopischen Bildpaar abgeleitetes Stereomodell über einer ebenen Bezugsfläche abgetastet. Beim photogrammetrischen Gerät gemäss US-PS 4 005 932 wird ein Messbild mittels eines optischen Projektors auf eine flexible Membrane mit einstellbarem Flächenverlauf projiziert. Das Bild auf der Membrane wird mittels einer Fernsehkamera auf einem ebenen Fernsehmonitor wiedergegeben. Aus einer topographischen Karte werden horizontale Anschlusspunkte auf einer transparenten Auflage markiert, und die markierte Auflage wird auf dem Monitor plaziert. Die Membrane wird nun so deformiert, dass die Anschlusspunkte der transparenten Auflage mit den entsprechenden Punkten des projizierten Messbildes zusammenfallen. Man erhält dadurch ein materielles Geländemodell.

Beim Auswertegerät gemäss US-PS 4 057 336 werden die Bilder eines Stereopaares mit komplementär polarisiertem Licht auf einen Schirm projiziert und durch komplementäre Analysatoren für das rechte und das linke Auge betrachtet. Dadurch ist es dem Operateur möglich, eine Zeichen- oder Sichtanzeige-Einrichtung derart neben dem Schirm anzuordnen, dass er Schirm und Anzeige abwechselnd ermüdungsfrei und im wesentlichen ohne Nachfokussieren der Augen betrachten kann.

Schliesslich erlaubt das bekannte Gerät "Zoom Transfer Scope" der Firma Bausch und Lomb eine simultane Betrachtung zweier separater Bilder. Dieses Gerät ist jedoch für stereophotogrammetrische Auswertung nicht geeignet und gibt keinen Hinweis auf eine Ueberlagerung mit einem Fernsehbild.

Aufgabe der Erfindung ist, ein photogrammetrisches Auswertegerät zu schaffen, welches eine vereinfachte und ermüdungsfreie Kartennachführung durch eine simultane Betrachtung einer vorhandenen Karte und des zugehörigen, aus einem stereoskopischen Bildpaar abgeleiteten Stereomodells ermöglicht.

Diese Aufgabe wird bei einem photogrammetrischen Auswertegerät mit

einem optischen Betrachtungssystem zur Betrachtung eines aus einem stereoskopischen Bildpaar abgeleiteten Stereomodells,

ersten steuerbaren Abtastmitteln zur Abtastung des Stereomodells,

einer Zeichen- oder Sichtanzeige -Einrichtung,

Mitteln zur Umsetzung der Bewegungen der ersten Abtastmittel in Zeichenbewegungen der Zeichen- oder Sichtanzeige-Einrichtung und

zweiten Mitteln zur Abtastung von Bildinformationen eines Bildplanes zur Darstellung eines Teiles des Bildplanes

gelöst durch Mittel zur Uebertragung eines Bildes des Teiles des Bildplanes in das optische Betrachtungssystem, sowie Mittel zur Ueberlagerung des Bildplan-Teilbildes und des Bildes des Stereomodells zur simultanen Betrachtung.

Vorteilhafte Ausführrunsformen des erfindungsgemässen Auswertegerätes sind in den Unteransprüchen gekennzeichnet.

Die Erfindung wird nachfolgend anhand von in den Figuren der Zeichnung dargestellten Ausführungsbeispielen näher beschrieben. Es zeigt.

Fig. 1 ein Schema eines erfindungsgemässen Auswertegerätes mit einem automatischen Zeichentisch als Zeichen- oder Sichtanzeigeeinrichtung und einem Computer, in dem die Bildinformationen des Bildplanes digital gespeichert sind,

Fig. 2 ein Schema eines anderen erfindungsgemässen Auswertegerätes mit einem Fernsehmonitor als Zeichen- oder Sichtanzeigeeinrichtung und einem Computer, in dem die Bildinformationen des Bildplanes digital gespeichert sind,

Fig. 3 ein Schema eines dritten erfindungsgemässen Auswertegerätes mit einem automatischen Zeichentisch als Zeichen- oder Sichtanzeigeeinrichtung, auf dem gleichzeitig der Bildplan angebracht ist, sowie mit einer Fernsehkamera und einem Fernsehmonitor zur Uebertragung eines Bildes des Teiles des Bildplanes in das optische Betrachtungssystem,

Fig. 4 eine für Geräte gemäss Fig. 1, 2 und 3 geeignete Ausführungsform von Mitteln zur Ueberlagerung des Bildplan-Teilbildes oder anderer Bildinformationen und des Bildes des Stereomodelles zur simultanen Betrachtung und

Fig. 5          einen zur Bildüberlagerung gemäss Fig. 4 geeigneten Strahlvereiniger.

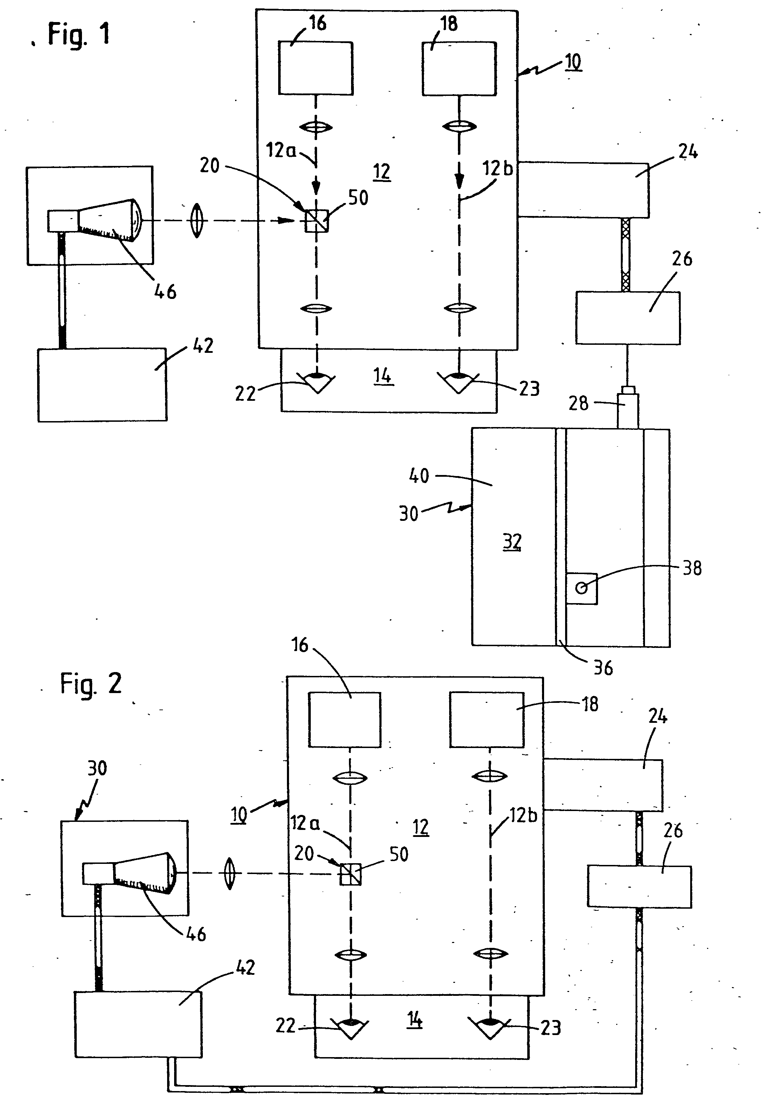

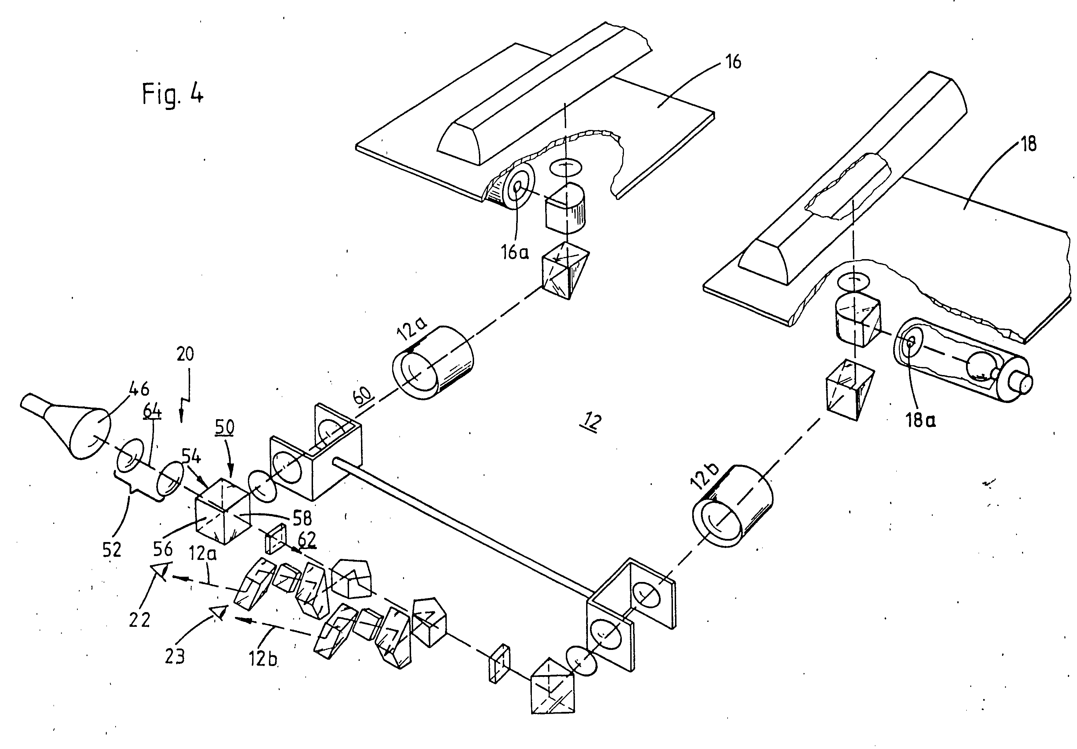

In den Figuren 1 - 3 ist das photogrammetrische Auswertegerät allgemein mit 10 bezeichnet. Es umfasst ein optisches Betrachtungssystem 12 zur Betrachtung eines aus einem stereoskopischen Bildpaar 16, 18 abgeleiteten Stereomodells durch einen Operateur 14. Derartige Betrachtungssysteme 12 nebst zugehörigen photogrammetrischen Auswertegeräten sind bekannt, z.B. das PG2 Stereo-Auswertegerät der Firma KERN & CO. AG, Aarau, Schweiz. Eine für das vorliegende Ausführungsbeispiel geeignete Ausführungsform des Betrachtungssystems 12 ist in FIG. 4 dargestellt und umfasst auch die Mittel 20 zur Bildüberlagerung.

Das Betrachtungssystem 12 ist binokular aufgebaut, wobei das linke Auge 22 des Operateurs 14 das linke Messbild 16 und das rechte Auge 23 das rechte Messbild 18 erblickt. Bei entsprechender Geräteeinstellung nimmt also der Operateur spontan ein von dem stereoskopischen Bildpaar 16,18 abgeleitetes Stereomodell wahr. Eine Vario-Einrichtung an sich bekannter Art zur Vergrösserung des Stereomodells ist im Betrachtungssystem 12 enthalten aber nicht mit dargestellt. Vergrösserungen von 2- 4- oder 8-fach sind einstellbar. Das Stereomodell umfasst die auszuwertenden Höhenlagen. Die entsprechenden Höhenlinien zeichnet der Operateur durch Modellabtastung mittels nicht mit dargestellten und an sich bekannten Abtastmitteln und Mitteln zur Umsetzung der Abtastbewegungen in Zeichenbewegungen.

Diese Mittel zur Umsetzung der Abtastbewegungen greifen die Bewegungen der Abtastmittel mechanisch oder elektromechanisch ab und übertragen die Lageinformationen auf eine Zeichen- oder Sichtanzeigeeinrichtung zur Speicherung. Mit Hilfe dieser Lageinformationen werden zwei- oder dreidimensionale Darstellungen des Geländes oder anderer aufzunehmender Objekte gezeichnet und gespeichert. Im hier beschriebenen Beispiel werden die Bewegungen der Abtastmittel durch elektrooptische Winkelschrittgeber abgegriffen und auf die Speichereinrichtung übertragen. Hierfür sind aber auch rein mechanische Mittel, z.B. Pantographen verwendbar.

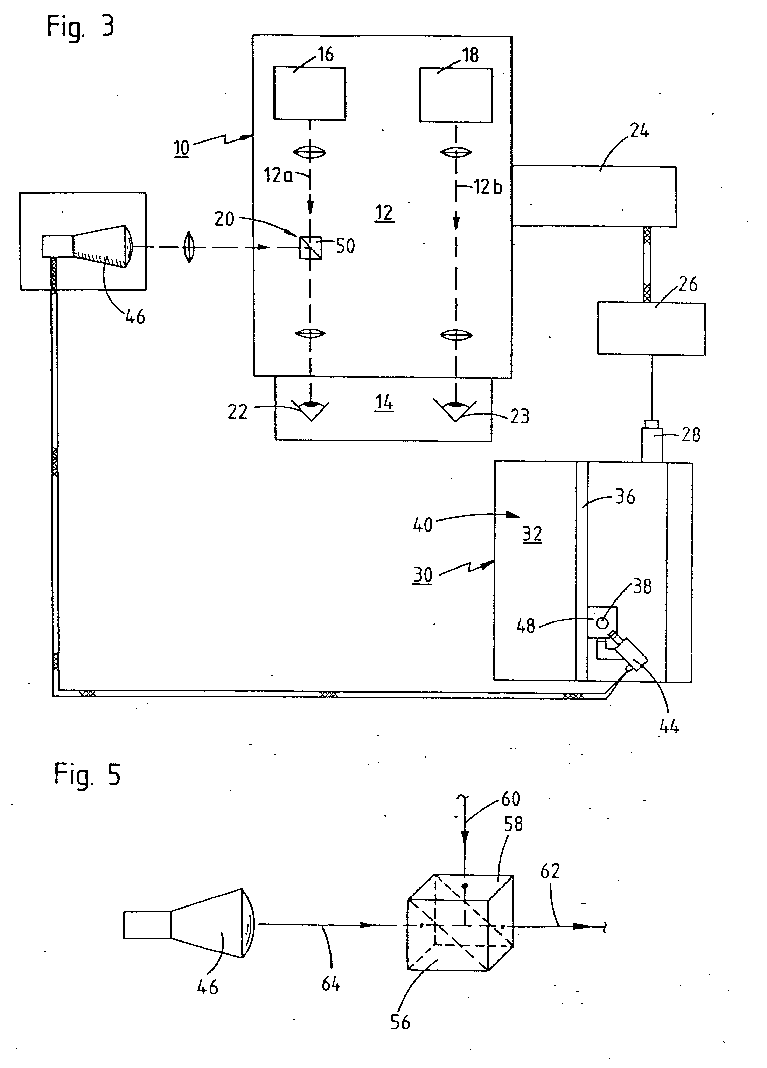

Gemäss FIG. 1 - 3 werden die Abtastbewegungen auf elektrooptische Winkelschrittgeber 24 übertragen, deren Ausgangssignale über eine Koppelstufe 26 auf Stellmotoren 28 der Zeicheneinrichtung 30 einwirken und deren Zeichenbewegungen steuern. Als Zeichen- oder Sichtanzeigeeinrichtung 30 ist in FIG 1 und FIG 3 ein automatischer Zeichentisch 32 vorgesehen, in FIG. 2 hingegen ein Fernsehmonitor 46. Winkelschrittgeber 24, Koppelstufe 26, Stellmotoren 28 und automatischer Zeichetisch 32 sind an sich bekannte Bauelemente. Der Zeichentisch 32 ist meistens neben dem Arbeitsplatz des Operateurs 14 angebracht und umfasst eine Gleitschiene 36 mit Zeichenstift oder Schreiber 38.

Erfindungsgemäss wird mit Vorteil ein elektronisch gesteuerter X-Y Koordinatograph als Zeichentisch 32 verwendet, der aufgrund der über die Koppelstufe 26 von den elektrooptischen Winkelschrittgebern 24 empfangenen Lageinformation mit Schreibfeder, Zeichenstift oder Schreiber 38 eine Karte zeichnet. Durch die Koppelstufe 26 kann der Operateur den Zeichenvorgang zusätzlich beeinflussen, z.B. durch Eingabe von Skalenfaktoren, Linienart, Heben oder Senken des Schreibers usw. . Die Schreibeinheit 38 weist mit Vorteil zwei auswählbare Stifthalter auf, die durch Spezialmotoren über die Zeichenfläche geführt werden.

Die Koppelstufe 26 ist als Rechner ausgeführt, der den Zeichentisch 32 steuert. Dieser Koordinatograph 32 umfasst bekanntlich eine Zeichenunterlage 40 mit darauf befindlichem Zeichnungsblatt für den Schreiber 38. Der Schreiber 38 wird in Y-Richtung, parallel zur Gleitschiene 36, durch eine Y-Spindel verschoben, die in einem Y-Wagen gelagert ist und von einem Y-Motor getrieben wird. Der Y-Wagen gleitet auf einem X-Wagen, der seinerseits durch eine X-Spindel in X-Richtung verschieblich ist. Wird die X-Spindel durch einen X-Motor angetrieben, so verschiebt sich also der X-Wagen mit dem Y-Wagen und Schreiber 38 in X-Richtung über das Zeichnungsblatt.

Führt nun der Operateur 14 am Auswertegerät 10 Abtastbewegungen am aus den Messbildern 16, 18 abgeleiteten Stereomodell aus, so führen die X- und Y-Motoren den Schreiber 38 aufgrund der von Schrittgebern 24 und Koppelstufe 26 erzeugten Steuersignale auf einer entsprechenden Höhenlinie auf dem Zeichnungsblatt. Dabei ist der Zeichnungsmassstab, je nach dem an der Rechenstufe 26 eingegebenen Skalenfaktor, grösser oder kleiner als der Massstab des abgefahrenen Stereomodells.

Das erfindungsgemässe photogrammetrische Auswertegerät umfasst nun noch zweite Abtastmittel zur Abtastung von Bildinformationen eines Bildplanes des Geländes zur Darstellung eines Teiles des Bildplanes. Dabei können die Bildinformationen in irgendeiner Form vorliegen, welche eine Umsetzung in eine Darstellung eines Teiles des Bildplanes erlaubt. Bei den Ausführungsbeispielen gemäss FIG 1 und FIG. 2 liegen die Bildinformationen in digitaler Form in einem Rechner 42 vor. Im Rechner 42 wird ein Teil des Bildplanes ausgelesen und in Bildsignale umgesetzt. Bei der Variante gemäss FIG. 3 liegen die Bildinformationen in Form eines auf dem automatischen Zeichentisch 32 befestigten Kartenplanes vor. Hier wird ein Teil des Bildplanes durch Abtastung des Kartenplanes auf dem Zeichentisch 32 übertragen. Dabei kann der darzustellende Teil des Bildplanes auf dem Uebertragungsweg in an sich bekannter Weise durch nicht mit dargestellte Mittel durch Zusatzinformation wie alphanumerische Daten ergänzt werden. Gemäss FIG. 2 ist anstelle des automatischen Zeichentisches als Zeichen- oder Sichtanzeigeeinrichtung 30 ein Fernsehmonitor 46 eingesetzt.

Gemäss FIG.1 und FIG.2 wird der Teil des Bildplanes also durch den Rechner 42 ausgelesen, während er gemäss FIG. 3 durch Abtastung des Kartenplanes auf dem Zeichentisch 32 mittels einer Fernsehkamera 44 übertragen wird. Erfindungsgemäss umfasst das Auswertegerät noch Mittel zur Uebertragung des Teiles des Bildplanes in das optische

Betrachtungssystem 12. Gemäss FIG.1 ist hierfür ein Fernseh- monitor 46 vorgesehen, der die durch den Rechner 42 ausgelesenen Bildinformationen in das Betrachtungssystem 12 eingibt. Zur Aufnahme des Teilbildes des Bildplanes vom Fernsehmonitor 46 ist das Betrachtungssystem 12 mit Mitteln 20 zur Ueberlagerung mit dem Bild des Stereomodelles versehen, welche mit dem Monitor 46 in optischer Verbindung stehen und eine simultane Betrachtung von Stereomodell und Teilbild erlauben.

Gemäss FIG.2 sind die Mittel zur Abtastung, Uebertragung und Ueberlagerung des Bildplan-Teilbildes entsprechend dem zu FIG 1 Beschriebenen ausgebildet, nur dient hier der Fernsehmonitor 46 gleichzeitig noch als Zeichen- oder Sichtanzeigeeinrichtung 30.

Gemäss FIG.3 wird der Teil des Bildplanes durch Abtastung des Kartenplanes auf dem Zeichentisch 32 mit der Fernsehkamera 44 aufgenommen, deren Bildsignale vom Fernsehmonitor 46 wiedergegeben und in das Betrachtungssystem 12 eingegeben werden. Hier wird das Teilbild über eine optische Verbindung von den Bild- überlagerungsmitteln 20 aufgenommen. Wie aus FIG.3 ersichtlich, ist die Fernsehkamera 44 am Zeichenkopf 48 nahe dem Schreiber 38 des automatischen Zeichentisches 32 montiert. Sie ist also immer auf den Teil des Kartenplanes, der gerade gezeichnet oder nachgeführt wird gerichtet und fokussierbar. Vario-Einrichtungen an sich bekannter Art sind im Betrachtungssystem 12, in der Fernsehkamera 44 oder im Fernsehmonitor 46 oder in mehreren dieser Stufen enthalten. Damit kann der Operateur den Massstab des Bildplanteilbildes vom Monitor 46 an denjenigen der Messbilder 16, 18 und des Stereomodells zur Bildüberlagerung anpassen.

Zur Abtastung und Uebertragung der Bildinformationen des Bildplanes können gemäss dem Stand der Technik auch weitere Mittel in dem Fachmann naheliegender Weise Verwendung finden. Beispielsweise können zur Bildübertragung vom Kartenplan auf dem automatischen Zeichentisch 32 in das optische Betrachtungssystem 12 faseroptische Bauelemente eingesetzt werden.

Wie in FIG 4 im Einzelnen dargestellt, dient als Mittel 20 zur Bildüberlagerung gemäss FIG 1, 2 und 3 ein Strahlvereiniger 50, der das Teilbild vom Fernsehmonitor 46 dem aus dem stereoskopischen Bildpaar 16, 18 abgeleiteten Stereomodell überlagert. Das optische Betrachtungssystem 12 umfasst zwei Optiken 12a und 12b, deren Ziellinien auf zueinander korrespondierende Gebiete der Messbilder 16 bzw. 18 gerichtet sind. Die Ziellinien sind in den FIG. 1 - 4 durch unterbrochene Linien dargestellt. Erste steuerbare Abtastmittel zur Abtastung des Stereomodells bewegen die Messbilder 16, 18 bezüglich des Betrachtungssystems 12 in an sich bekannter Weise und sind daher nicht mit dargestellt. Diese Mittel umfassen mit Vorteil für jedes Messbild 16, 18 einen Tisch, womit jedes Messbild in zwei zueinander rechtwinkligen Richtungen verschiebbar ist, sowie feststehende Messmarken 16a, 18a. Auf den Messbildern 16, 18 befindliche Referenzmarken (nicht mit dargestellt) werden ebenfalls vom Operateur 22, 23 durch die Optiken 12a, 12b betrachtet und dienen der Orientierung der Messbilder 16, 18 zueinander.

- 14 -

Durch Projektion des Teiles des Bildplanes des Geländes vom Fernsehmonitor 46 durch ein Linsensystem 52 mittels an sich bekannter Baulemente auf ein Teilerprisma 54 erblickt also der Operateur 14 mit seinen Augen 22, 23 durch die Optiken 12a, 12b simultan das Stereomodell mit dem überlagerten Bildplanteilbild.

Wie aus FIG 4 und FIG. 5 ersichtlich, ist der in den Bildüberlagerungsmitteln 20 enthaltene Strahlvereiniger 50 als Teilerprisma 54 ausgeführt, welches aus zwei rechtwinkligen Prismen 56, 58 zusammengesetzt ist.Dadurch wird das auf der optischen Achse 60 einfallende Bild des Messbildes 16 an der Teilerfläche in die Richtung 62 umgelenkt und dem Bild vom Monitor 46 überlagert, welches auf der Achse 64 einfällt und das Teilerprisma 54 ohne Richtungsänderung in der gemeinsamen Richtung 62 verlässt. Gemäss FIG 4 ist das Teilbild vom Fernsehmonitor 46 dem linken Auge 22 des Operateurs 14 zugeführt. Dieses Teilbild kann aber auch, je nach den Erfordernissen dem rechten Auge 23 zugeführt sein.

Gemäss dem Stand der Technik beansprucht der Vorgang der Kartennachführung wesentlich mehr Zeit als das Zeichnen einer neuen Karte, weil zur Unterscheidung zwischen neuen Objekten (Strassen, Häuser usw.) und bereits erfassten Signaturen ein laufender Vergleich zwischen den neuen Luftbildern und dem alten Kartenblatt erforderlich ist. Hier schafft die vorliegende Erfindung eine wesentliche Vereinfachung. Durch die simultane Betrachtung der Ueberlagerung von hochpräzisen Abbildungen einer bestehenden Karte und neuer Luftbilder mit weitgehender Kongruenz ist eine schnelle und genaue Kartennachführung möglich. Neue Objekte werden sofort erkannt und es entstehen keine Zweifel darüber, ob die Kartennachführung vollständig ist.

Es ist offensichtlich, dass über das beschriebene Ausführungsbeispiel hinausgehende Varianten der Erfindung möglich sind, ohne den allgemeinen Erfindungsgedanken zu verlassen. So könnte man den Bildplan, der meistens eine entzerrte Darstellung in Orthogonalprojektion aufweist, beispielsweise mittels des Rechners 42 einer der Zentralprojektion der Luftbilder entsprechenden Transformation unterwerfen, um eine bessere Uebereinstimmung zwischen Stereomodell und überlagertem Bildplanteilbild vom Monitor 46 zu erzielen. Die Erfindung ist somit nicht auf das beschriebene Ausführungsbeispiel beschränkt, sondern durch die beigefügten Patentansprüche definiert.

Patentansprüche

1.  Photogrammetrisches Auswertegerät (10) mit einem optischen Betrachtungssystem (12) zur Betrachtung eines aus einem stereoskopischen Bildpaar (16, 18) abgeleiteten Stereomodells, ersten steuerbaren Abtastmitteln (24) zur Abtastung des Stereomodells, einer Zeichen- oder Sichtanzeige-Einrichtung (30), Mitteln (26, 28) zur Umsetzung der Bewegungen der ersten Abtastmittel in Zeichenbewegungen der Zeichen- oder Sichtanzeige-Einrichtung und zweiten Mitteln (42, 44) zur Abtastung von Bildinformationen eines Bildplanes zur Darstellung eines Teiles des Bildplanes, gekennzeichnet durch Mittel (46) zur Uebertragung eines Bildes des Teiles des Bildplanes in das optische Betrachtungssystem (12), sowie Mittel (20) zur Ueberlagerung des Bildplan-Teilbildes und des Bildes des Stereomodelles zur simultanen Betrachtung.

2.  Auswertegerät nach Patentanspruch 1, dadurch gekennzeichnet, dass die zweiten Abtastmittel (44) mindestens einen Teil der Bildinformationen des Bildplanes an einem auf der Zeichen- oder Sichtanzeige-Einrichtung (30) befindlichen Bild abtasten.

3.  Auswertegerät nach Patentanspruch 1 oder 2, dadurch gekennzeichnet, dass die Zeichen- oder Sichtanzeige-Einrichtung (30) ein Fernseh-Monitor (46) ist.

4. Auswertegerät nach Patentanspruch 1 oder 2 dadurch gekennzeichnet, dass die Zeichen- oder Sichtanzeige-Einrichtung (30) ein automatischer Zeichentisch (32) ist.

5. Auswertegerät nach Patentanspruch 4, dadurch gekennzeichnet, dass die zweiten Abtastmittel für den Bildplan als Fernsehkamera (44) und die Mittel zur Bildübertragung in das optische Betrachtungssystem als Fernsehmonitor (46) ausgebildet sind, wobei der Fernsehmonitor das von der Fernsehkamera (44) aufgenommene Bild empfängt und mit den Mitteln (20) zur Ueberlagerung von Bildplan-Teilbild und Stereomodell optisch verbunden ist.

6. Auswertegerät nach Patentanspruch 4, dadurch gekennzeichnet, dass die Mittel zur Bildübertragung eines Teiles des Bildplanes in das optische Betrachtungssystem faseroptische Bauelemente umfassen.

7. Auswertegerät nach Patentanspruch 1, dadurch gekennzeichnet, dass das optische Betrachtungssystem (12) eine Vario-Einrichtung umfasst.

8. Auswertegerät nach Patentanspruch 5, dadurch gekennzeichnet, dass die Fernsehkamera (44) oder der Fernsehmonitor (46) eine Vario-Einrichtung umfasst.

9. Auswertegerät nach Patentanspruch 2, dadurch gekennzeichnet, dass die Zeichen- oder Sichtanzeigeeinrichtung (30) einen Pantograph umfasst.

10. Auswertegerät nach Patentanspruch 1, dadurch gekennzeichnet, dass die Bildinformationen des Bildplanes in einer Rechenanlage (42) in digitaler Form gespeichert sind.

11. Auswertegerät nach Patentanspruch 5, dadurch gekennzeichnet, dass die Mittel zur Bildüberlagerung der Bilder des Fernsehmonitors (46) und des Stereomodells einen optischen Strahlvereiniger (50) umfassen.

12. Verwendung des Auswertegerätes nach einem der Patentansprüche 1 bis 11 zur Kartennachführung.

Fig. 1

Fig. 2

**Fig. 3**

**Fig. 5**

Fig. 4

16

18

-3-

0035967